# EUROPEAN PATENT SPECIFICATION

(11) **EP 3 978 083 B1**
(45) Date of publication and mention of the grant of the patent: **22.11.2023**
(21) Application number: 20813947.7
(22) Date of filing: 14.05.2020
(51) Int. Cl.: A62D 3/17, A62D 101/28, A62D 3/38

(54) **METHOD FOR DEGRADING CANNABINOID**
VERFAHREN ZUM ABBAU VON CANNABINOID
PROCÉDÉ DE DÉGRADATION DE CANNABINOÏDE

(30) Priority: 30.05.2019 CN 201910464062
(43) Date of publication of application: 06.04.2022
(73) Proprietor: Hanyi Biotechnology (Beijing) Co., Ltd., Hujialou Chaoyang District Beijing 100020 (CN)
(72) Inventor: TAN, Xin, Beijing 100020 (CN); SUN, Wuxing, Beijing 100020 (CN); XING, Junbo, Beijing 100020 (CN); WANG, Shubin, Beijing 100020 (CN); MA, Youping, Beijing 100020 (CN); ZHANG, Jing, Beijing 100020 (CN)
(74) Representative: Murgitroyd & Company
(86) International application number: PCT/CN2020/090346
(87) International publication number: WO 2020/238641

(56) References cited:
- WO-A1-2017/193169
- CN-A- 1 688 290
- CN-A- 102 275 989
- CN-A- 107 570 179
- CN-A- 110 038 251
- GB-A- 2 392 093
- SUN, Weilai et al.: "Effects of storage conditions on the chemical potency of Cannabis", Guihaia, vol. 37, no. 9, 31 December 2017 (2017-12-31), pages 1204-1212, XP055868893,

## Description

### FIELD

The invention relates to the technical field of photocatalytic chemistry, in particular to a method for degrading cannabinoid.

### BACKGROUND

Photocatalytic reaction means that a photocatalyst converts light energy existing in nature into energy needed for chemical reaction to produce catalysis to excite the surrounding oxygen and water molecules into oxidizing free negative ions and promote the chemical reaction. The photocatalytic reaction can decompose almost all organic substances and some inorganic substances which are harmful to a human body and the environment, which can not only accelerate the reaction, but also take advantage of the laws of nature, without causing waste of resources and formation of additional pollution. Photocatalysis technology is a green and low-carbon technology with important application prospects in the field of energy and the environment, especially in sewage treatment and environmental protection. The reaction conditions of photocatalytic degradation are mild, the photocatalysts used are non-toxic, insoluble in water and organic solvents, and can be recycled, which avoids the secondary pollution and destruction of ecological balance caused by the degradation of organic compounds by strong acids and bases, and greatly reduces the cost of waste liquid treatment in enterprises.

Cannabinoids are secondary metabolites containing alkyl and monoterpene groups in cannabis plants. At present, more than 70 cannabinoids have been isolated from cannabis plants, including tetrahydrocannabinol (THC), cannabidiol (CBD), cannabigerol (CBG), cannabichromene (CBC), cannabinol (CBN), and propyl homologues Δ9-tetrahydrocannabivarin (THCV), cannabidivarin (CBDV) and so on. Some of these ingredients are psychoactive, e.g., tetrahydrocannabinol is a hallucinogenic and addictive substance. Hemp has important economic value and can be used in textile, food, medicine, papermaking, and other fields. As industrial hemp, it requires a very low content of THC, so it does not have drug use value. Therefore, cannabis extract or waste liquid containing cannabinoids should be treated to eliminate safety risks before discharge.

GB 2392093A discloses a method for degrading cannabinoid by a photocatalytic reaction on a solution containing cannabinoid, whereas CN 102275 989A and CN 107570179A disclose some types of catalysts.

Researchers have found that the content of cannabinoids decreases significantly under light conditions (SUN WL, ZHAO YB, ZHENG XY, et al. "Effects of storage conditions on the chemical potency of Cannabis" [J]. Guihaia, 2017, 37(9): 1204-1212), that is, it is proved that cannabinoids can be degraded under light. However, under natural conditions, degradation of cannabinoids is slow and insufficient. To improve the degradation efficiency of cannabinoids and improve the discharge safety standard of waste liquid containing cannabinoids, the invention applies the photocatalytic technology to the treatment of the waste liquid containing cannabinoids produced in a process of hemp extraction and processing for the first time, greatly degrades the cannabinoids in the waste liquid, improves the degradation efficiency, and achieves a purpose of economic and environmental protection.

### SUMMARY

To achieve the above purpose, the invention provides a method for degrading cannabinoid by a photocatalytic reaction on a solution containing cannabinoid using a photocatalyst as defined in claims 1 to 10. According to the methods, an inorganic photocatalyst is used for a photocatalytic reaction on a solution containing cannabinoid in illumination equipment with a certain illumination intensity, the photocatalyst can be recycled and reused after reaction, and the content of cannabinoid in the solution after the reaction is reduced to ppm-level.

The invention provides a method for degrading cannabinoid, according to the method, a solution containing cannabinoid is subjected to a photocatalytic reaction.

The method for degrading cannabinoid provided by the invention includes the following steps:
(1) placing the solution containing cannabinoid in a container equipped with illumination equipment, adding a photocatalyst, and stirring at room temperature; and
(2) standing the solution in step (1), and filtering to obtain a filtrate and a filter cake.

The cannabinoid includes one or a combination of two or more of tetrahydrocannabinol THC, cannabidiol CBD, cannabigerol CBG, cannabichromene CBC, cannabinol CBN, and tetrahydrocannabivarin THCV and cannabidivarin CBDV

Preferably, the container in step (1) is a sealed container.

The illuminance of the illumination equipment described in step (1) is 2000~20000Lx, preferably, the illuminance is 4500~12000 Lx, and more preferably, the illuminance is 7000~12000 Lx.

The amount of the photocatalyst in step (1) is 5%-50% (mg/mL); preferably, the amount of the photocatalyst is 10%-30% (mg/mL) and, more preferably, the amount of the photocatalyst is 10%-20% (mg/mL).

The unit mg/mL in the invention refers to a mass of the photocatalyst added to the 1 mL solution containing cannabinoid.

The photocatalyst described in step (1) is selected from one or a combination of two or more of bismuth vanadate, bismuth oxychloride, bismuth vanadate/titanium dioxide composite, bismuth vanadate/bismuth oxychloride composite, bismuth oxychloride/titanium dioxide composite in any proportion; and more preferably, the photocatalyst is bismuth vanadate or bismuth vanadate/bismuth oxychloride composite.

Preferably, the stirring time in step (1) is 5~60 minutes, and more preferably, the stirring time is 5~30 minutes.

Preferably, the standing time in step (2) is 12-78 hours, more preferably, the standing time is 12-50 hours, and more preferably, the standing time is 12-24 hours.

Preferably, after step (2), the method further includes a step of washing and drying the filter cake obtained in step (2), and the photocatalyst can be recovered from the washed and dried filter cake. Specifically, the filter cake is washed with a solvent selected from one or a combination of two or more of water, ethanol, acetone, ethyl acetate, n-heptane, n-pentane, n-propanol, isopropanol, n-butanol, ethyl formate, and dimethyl sulfoxide, preferably, the solvent is water and/or ethanol, and more preferably, the concentration of ethanol is 95%.

Preferably, the washing step is alternately washing with water and ethanol; the number of alternating washing is 1-6 times, and more preferably 2-3 times.

Preferably, the drying step is vacuum drying, and the temperature of the vacuum drying is 50-80°Cand the time is 12-24 hours.

Preferably, step (2) also includes a step of detecting the filtrate obtained from step (2), and the detection method is selected from liquid chromatography analysis detection, mass spectrometry analysis detection, fluorescence detection, or ultraviolet detection.

Before step (1), the method may also include: (a) concentrating the solution containing cannabinoid to obtain a thick paste; and (b) adding a solvent to the thick paste, stirring for dissolving to obtain an enriched liquid of the solution containing cannabinoid.

The solution containing a cannabinoid in step (a) or (1) is a waste liquid produced in a process of extraction and purification of hemp.

Preferably, the method of concentration in step (a) is vacuum concentration. Preferably, the operating temperature of the vacuum concentration is 40-70°C, and more preferably, the temperature is 60°C.

Preferably, the solvent described in step (b) is an organic solvent, more preferably, the organic solvent is selected from one or combination of two or more of ethanol, methanol, ethyl acetate, acetone, chloroform, petroleum ether, n-hexane, and n-heptane in any proportion; and more preferably, the organic solvent is selected from one or a combination of two or more of ethanol, methanol, ethyl acetate, and acetone in any proportion.

Preferably, the dissolution temperature of step (b) is room temperature.

Preferably, the method for degrading a cannabinoid provided by the invention comprises the following steps:
(1) concentrating the solution containing cannabinoid under reduced pressure at 40-70°C to obtain a thick paste;
(2) adding ethanol, methanol, and/or acetone to the thick paste, stirring for dissolving to obtain an enriched liquid of the solution containing cannabinoid;
(3) put the enriched liquid in a container equipped with 2000~20000 Lx illumination equipment, adding a photocatalyst bismuth such as vanadate, bismuth oxychloride, bismuth vanadate / titanium dioxide 5% / 50% (mg/mL), stirring at room temperature for 5 minutes to 60 minutes;
(4) standing the liquid after reaction in step (3) for 12-78 hours, and then filtering to obtain a filtrate and a filter cake;
(5) washing the filter cake described in step (4) is washed with water and/or ethanol 1-6 times, and then drying at 50-80°C for 12-24 hours to obtain a recovered photocatalyst; and
(6) detecting the filtrate in step (4) by liquid chromatography.

The method for degrading cannabinoid in the invention can reduce content of cannabinoids in the waste liquid to less than 20 ppm. The raw materials and reagents used in the method are cheap and easy to obtain, the operation and testing methods are simple, and the photocatalyst can be recycled, avoiding waste of resources, and facilitating industrialization.

### BRIEF DESCRIPTION OF THE DRAWINGS

FIG 1 is a high-performance liquid chromatogram of standards CBDV, CBG, CBD, THCV, and THC in Example 1 of the invention.
FIG.2 is a high-performance liquid chromatogram of a waste liquid sample before degradation in Example 1 of the invention.
FIG.3 is a high-performance liquid chromatogram of a filtrate after degradation in Example 1 of the invention.

### DETAILED DESCRIPTION

Unless otherwise defined, all technical and scientific terms used herein have the same meaning as commonly understood by those skilled in the field of the invention. The following examples are used to illustrate the invention but not to limit it. The following abbreviations and their corresponding substances appearing in the invention are:
- CBDV: cannabidivarin
- CBD: cannabidiol
- CBG: cannabigerol
- THCV: Δ9-tetrahydrocannabivarin
- THC: tetrahydrocannabinol

In combination with the examples of the invention, the technical scheme of the invention will be described clearly and completely, and it is obvious that the described examples are only part of the examples of the invention, not all of the examples. Based on the examples of the invention, all other examples obtained by those skilled in the field without creative work shall fall within the protection scope of the invention.

### Example 1

1. The steps of the method for degrading cannabinoid in the present example are as follows:
   (1) after reserving a sample from a waste liquid containing cannabinoid, the remaining waste liquid was concentrated under reduced pressure at 60°C to obtain a thick paste;
   (2) the thick paste was added with 95% ethanol, stirred for dissolution and dissolving to obtain an enriched liquid of the waste liquid containing cannabinoid;
   (3) the enriched liquid in step (2) was placed in a closed treatment tank with illumination equipment, and 10% (mg/mL) of photocatalyst bismuth vanadate was added, and the resulting mixture was stirred at room temperature for 30 minutes with illuminance of 7000 Lx;
   (4) the liquid after reaction in step (3) was left standing for 12 hours, and then filtered to obtain a filtrate and a filter cake;
   (5) the filter cake obtained in step (4) was added into water, and stirred for 15 minutes and then filtered to collect a filter cake. The resulting filter cake was added into 95% ethanol, and the resulting mixture was stirred for 15 minutes and then filtered to collect a filter cake. The resulting filter cake was washed repeatedly for 3 times. The finally collected filter cake was dried in a vacuum environment at 50°C for 24 hours to obtain a recovered photocatalyst; and
   (6) the reserved sample of step (1) and the filtrate obtained in step (4) were analyzed by high-performance liquid chromatography (HPLC) to detect the contents of CBDV, CBD, CBG, THCV, and THC.
2. Methods of sample detection and analysis

High-performance liquid chromatography detection conditions and system applicability test: octadecyl silane bonded silica gel was used as a filler, 0.1% formic acid aqueous solution as mobile phase A, 0.1% formic acid in acetonitrile as mobile phase B, the elution procedure is as follows, the detection wavelength was 220 nm, and the number of theoretical plates calculated by CBD was not less than 12000.

When the elution time was 0-6 minutes, the volume concentration of the mobile phase: mobile phase A: 30%, and mobile phase B: balance; when the elution time was 6-12 minutes, the volume concentration of the mobile phase: mobile phase A: 30% to 23% in a gradient, and mobile phase B: balance; when the elution time was 12-22 minutes, the volume concentration of the mobile phase: mobile phase A: 23%, and mobile phase B: balance; when the elution time was 22-22.2 minutes, the volume concentration of the mobile phase: mobile phase A: 23% to 30% in a gradient, mobile phase B: balance; when the elution time was 22.2-26 minutes, the volume concentration of the mobile phase: mobile phase A: 30%, and mobile phase B: balance.

Preparation of standard solution: standard solutions of CBDV, CBG, CBD, THC, and THCV with a concentration of 1.0 mg/ml were precisely measured, and respectively diluted in methanol into a standard solution with concentrations of CBDV, CBG, THC, and THCV being 10 µg/mL, and concentration of CBD being 150 µg/mL.

Preparation of waste liquid sample before degradation: 1.5 mL the reserved sample in step (1) was measured and placed in a 5 mL volumetric flask, dissolved and diluted to the calibration line with methanol, shaken well, filtered, and the filtrate was taken for detection and analysis.

Preparation of filtrate sample after degradation: 1.5 mL the filtrate obtained in step (3) was measured and placed in a 5 mL volumetric flask, dissolved and diluted to the calibration line with methanol, shaken well, filtered, and the filtrate was taken for detection and analysis.

10 µL of the waste liquid sample before degradation and 10 µL of the filtrate sample after degradation were injected into high-performance liquid chromatography (HPLC), and chromatograms were recorded.

### 3. Experimental results

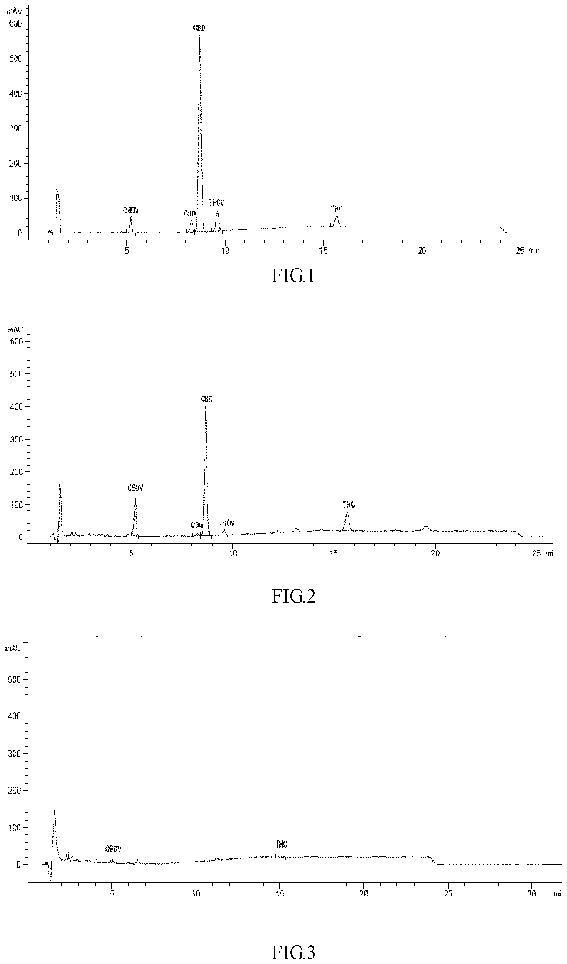

The chromatogram of standard solution in this example is shown in FIG. 1, and the chromatogram of the waste liquid sample before degradation is shown in FIG.2, it can be obviously seen that the waste liquid sample before degradation contains CBDV, CBG, CBD, THC and THCV, especially contents of CBD, CBDV and THC are higher.

The chromatogram of the filtrate sample after degradation in this example is shown in FIG. 3. Compared with FIG. 1 and FIG. 2, the chromatographic peaks of CBG, CBD, and THCV substantially disappear, indicating that the remaining contents of CBG, CBD, and THCV were very small; and the chromatographic peaks of CBDV and THC are very narrow and low, indicating that the contents of CBDV and THC were low. According to the calculation, the total content of cannabinoids in the filtrate sample after degradation was 10 ppm. The experimental results show that the method for degrading cannabinoid in the invention can greatly degrade cannabinoids in waste liquid samples, and the total content of cannabinoids after degradation may reach ppm-level.

### Example 2

1. The steps of the method for degrading cannabinoid in the example are as follows:
   (1) after reserving a sample from a waste liquid containing cannabinoid, the remaining waste liquid was concentrated under reduced pressure at 70°C to obtain a thick paste;
   (2) the thick paste was added with ethyl acetate, stirred for dissolution to obtain an enriched liquid of the waste liquid containing cannabinoid;
   (3) the enriched liquid of step (2) was placed in a closed treatment tank with illumination equipment, and 20% (mg/mL) of photocatalyst bismuth vanadate/bismuth oxychloride was added, and the resulting mixture was stirred at room temperature for 60 minutes with illuminance of 10000 Lx;
   (4) the liquid after reaction in step (3) was left standing for 24 hours, and then filtered to obtain a filtrate and a filter cake;
   (5) the filter cake obtained in step (4) was added into water, and the resulting mixture was stirred for 15 minutes and then filtered to collect a filter cake. The resulting filter cake was added into 95% ethanol, and the resulting mixture was stirred for 15 minutes and then filtered to collect a filter cake. The resulting filter cake was washed repeatedly for 6 times. The finally collected filter cake was dried in a vacuum environment at 80°C for 12 hours to obtain a recovered photocatalyst; and
   (6) the reserved sample solution of step (1) and the filtrate obtained in step (4) were analyzed by high-performance liquid chromatography (HPLC) to detect the contents of CBDV, CBD, CBG, THCV, and THC.
2. Methods of sample detection and analysis

High-performance liquid chromatography detection conditions and system applicability test: octadecyl silane bonded silica gel was used as a filler, 0.1% formic acid in acetonitrile as mobile phase A, 0.1% formic acid aqueous solution as mobile phase B, the elution procedure is as follows, the detection wavelength was 220 nm, and the number of theoretical plates calculated by CBD was not less than 12000.

When the elution time was 0-6 minutes, the volume concentration of the mobile phase: mobile phase A: 30%, and mobile phase B: balance; when the elution time was 6-12 minutes, the volume concentration of the mobile phase: mobile phase A: 30% to 23% in a gradient, and mobile phase B: balance; when the elution time was 12-22 minutes, the volume concentration of the mobile phase: mobile phase A: 23%, and mobile phase B: balance; when the elution time was 22-22.2 minutes, the volume concentration of the mobile phase: mobile phase A: 23% to 30% in a gradient, and mobile phase B: balance; when the elution time was 22.2-26 minutes, the volume concentration of the mobile phase: mobile phase A: 30%, and mobile phase B: balance.

Preparation of standard solution: standard solutions of CBDV, CBG, CBD, THC, and THCV with a concentration of 1.0 mg/ml were precisely measured, and respectively diluted in methanol into a standard solution with concentrations of CBDV, CBG, THC, and THCV being 10 µg/mL, and concentration of CBD being 150 µg/mL.

Preparation of waste liquid sample before degradation: 1.5 mL the reserved sample in step (1) was measured and placed in a 5 mL volumetric flask, dissolved and diluted to the calibration line with methanol, shaken well, filtered, and the filtrate was taken for detection and analysis.

Preparation of filtrate sample after degradation: 1.5 mL the filtrate obtained in step (3) was measured and placed in a 5 mL volumetric flask, dissolved and diluted to the calibration line with methanol, shaken well, filtered, and the filtrate taken for detection and analysis.

10 µL of the waste liquid sample before degradation and 10 µL of the filtrate sample after degradation were injected into high-performance liquid chromatography (HPLC), and chromatograms were recorded.

### 3. Experimental results

According to calculation based on the chromatograms of the standard solution, the waste liquid sample before degradation and the filtrate sample after degradation in this example, the total content of cannabinoids in the filtrate sample after degradation was 8 ppm. The experimental results show that cannabinoid in a waste liquid sample can be greatly degraded by reasonably changing the amount of photocatalyst and the catalysis time according to the method for degrading cannabinoid of the invention, and the total content of cannabinoids after degradation may reach ppm-level.

### Example 3

1. The steps of the method for degrading cannabinoid in the example are as follows:
   (1) reserving a sample from a waste liquid containing cannabinoid, the remaining waste liquid was concentrated under reduced pressure at 40°C to obtain a thick paste;
   (2) the thick paste was added with acetone, stirred for dissolution to obtain an enriched liquid of the waste liquid containing cannabinoid;
   (3) the enriched liquid of step (2) was placed in a closed treatment tank with illumination equipment, and 30% (mg/mL) of example 1 recovered bismuth vanadate photocatalyst was added, and the resulting mixture was stirred at room temperature for 60 minutes with illuminance of 4500 Lx;
   (4) the liquid after reaction in step (3) was left standing for 78 hours, and then filtered to obtain a filtrate and a filter cake;
   (5) the filter cake obtained in step (4) was added into water, and the resulting mixture was stirred for 15 minutes and then filtered to collect a filter cake. The resulting filter cake was added into 95% ethanol, and the resulting mixture was stirred for 15 minutes and then filtered to collect a filter cake. The resulting filter cake was washed repeatedly for 2 times. The finally collected filter cake was dried in a vacuum environment of 80°C for 12 hours to obtain a recovered photocatalyst; and
   (6) the reserved sample of step (1) and the filtrate obtained in step (4) were analyzed by high-performance liquid chromatography (HPLC) to detect the contents of CBDV, CBD, CBG, THCV, and THC.
2.Methods of sample detection and analysis

The methods of sample detection and analysis of this example were the same as those of Example 2.

### 3. Experimental results

According to calculation based on the chromatograms of the standard solution, the waste liquid sample before degradation, and the filtrate sample after degradation in this example, the total content of cannabinoids in the filtrate sample after degradation was 10 ppm. The experimental results show that the recovered photocatalyst used in the method for degrading cannabinoid of the invention can still greatly degrade cannabinoids in waste liquid samples, and the total content of cannabinoids can still reach ppm-level after degradation.

### Example 4

1. The steps of the method for degrading cannabinoid in the example are as follows:
   (1) after reserving a sample from a waste liquid containing cannabinoid, the remaining waste liquid was concentrated under reduced pressure at 60°C to obtain a thick paste;
   (2) the thick paste was added with methanol, stirred for dissolution to obtain an enriched liquid of the waste liquid containing cannabinoid;
   (3) the enriched liquid in step (2) was placed in a closed treatment tank with illumination equipment, and 20% (mg/mL) of photocatalyst bismuth oxychloride was added, and the resulting mixture was stirred at room temperature for 5 minutes with illuminance of 20000 Lx;
   (4) the liquid after reaction in step (3) was left standing for 50 hours, and then filtered to obtain a filtrate and a filter cake;
   (5) the filter cake obtained in step (4) was added into water, and the resulting mixture was stirred for 15 minutes and then filtered to collect a filter cake. The resulting filter cake was added into 95% ethanol, and the resulting mixture was stirred for 15 minutes and then filtered to collect a filter cake. The resulting filter cake was washed repeatedly for 3 times. The finally collected filter cake was dried in a vacuum environment at 80°C for 12 hours to obtain a recovered photocatalyst; and
   (6) the reserved sample of step (1) and the filtrate obtained in step (4) were analyzed by high-performance liquid chromatography (HPLC) to detect the contents of CBDV, CBD, CBG, THCV, and THC.
2.Methods of sample detection and analysis

The methods of sample detection and analysis of this example were the same as those of Example 2.

### 3. Experimental results

According to calculation based on the chromatograms of the standard solution, the waste liquid sample before degradation, and the filtrate sample after degradation in this example, the total content of cannabinoids in the filtrate sample after degradation was 15 ppm. The experimental results show that the method for degrading cannabinoid of the invention can greatly degrade cannabinoids in waste liquid samples, and the total content of cannabinoids after degradation may reach ppm-level.

### Example 5

1. The steps of the method for degrading cannabinoid in the example are as follows:
   (1) after reserving a sample from a waste liquid containing cannabinoid, the remaining waste liquid was concentrated under reduced pressure at 60°C to obtain a thick paste;
   (2) the thick paste was added with 95% ethanol, stirred for dissolution to obtain an enriched liquid of the waste liquid containing cannabinoid;
   (3) the enriched liquid in step (2) was placed in a closed treatment tank with illumination equipment, and 15% (mg/mL) of photocatalyst bismuth vanadate/titanium dioxide was added, and the resulting mixture was stirred at room temperature for 60 minutes with illuminance of 20000 Lx;
   (4) the liquid after reaction in step (3) was left standing for 24 hours, and then filtered to obtain a filtrate and a filter cake;
   (5) the filter cake obtained in step (4) was added into water, and the resulting mixture was stirred for 15 minutes, and then filtered to collect a filter cake. The resulting filter cake was added into 95% ethanol, and the resulting mixture was stirred for 15 minutes and then filtered to collect a filter cake, the finally collected filter cake was dried in a vacuum environment at 80°C for 12 hours to obtain a recovered photocatalyst; and
   (6) the reserved sample of step (1) and the filtrate obtained in step (4) were analyzed by high-performance liquid chromatography (HPLC) to detect the contents of CBDV, CBD, CBG, THCV, and THC.
2.Methods of sample detection and analysis

The methods of sample detection and analysis of this example were the same as those of Example 2.

### 3. Experimental results

According to calculation based on the chromatograms of the standard solution, the waste liquid sample before degradation, and the filtrate sample after degradation in this example, the total content of cannabinoids in the filtrate sample after degradation was 12 ppm. The experimental results show that the method for degrading cannabinoid of the invention can greatly degrade cannabinoids in waste liquid samples, and the total content of cannabinoids after degradation may reach ppm-level.

### Example 6

1. The steps of the method for degrading cannabinoid in the example are as follows:
   (1) after reserving a sample from a waste liquid containing cannabinoid, the remaining waste liquid was concentrated under reduced pressure at 60°C to obtain a thick paste;
   (2) the thick paste was added with 95% ethanol, stirred for dissolution to obtain an enriched liquid of the waste liquid containing cannabinoid;
   (3) the enriched liquid in step (2) was placed in a closed treatment tank with illumination equipment, and 5% (mg/mL) of photocatalyst bismuth vanadate was added, and the resulting mixture was stirred at room temperature for 60 minutes with illuminance of 12000 Lx;
   (4) the liquid after reaction in step (3) was left standing for 78 hours, and then filtered to obtain a filtrate and a filter cake;
   (5) the filter cake obtained in step (4) was added into water, and the resulting mixture was stirred for 15 minutes, and then filtered to collect a filter cake. The resulting filter cake was added into 95% ethanol, and the resulting mixture was stirred for 15 minutes and then filtered to collect a filter cake. The resulting filter cake was washed repeatedly for 3 times. The finally collected filter cake was dried in a vacuum environment at 80°C for 12 hours to obtain a recovered photocatalyst; and
   (6) the reserved sample of step (1) and the filtrate obtained in step (4) were analyzed by high-performance liquid chromatography (HPLC) to detect the contents of CBDV, CBD, CBG, THCV, and THC.
2.Methods of sample detection and analysis

The methods of sample detection and analysis of this example were the same as those of Example 2.

### 3. Experimental results

According to calculation based on the chromatograms of the standard solution, the waste liquid sample before degradation, and the filtrate sample after degradation in this example, the total content of cannabinoids in the filtrate sample after degradation was 13 ppm. The experimental results show that the method for degrading cannabinoid of the invention can greatly degrade cannabinoids in waste liquid samples, and the total content of cannabinoids after degradation may reach ppm-level.

### Example 7

The amount of photocatalyst used in this example was 10% (mg/mL), and other experimental and detection conditions were the same as those in Example 6.

### Example 8

The amount of photocatalyst used in this example was 20% (mg/mL), and other experimental and detection conditions were the same as those in Example 6.

### Example 9

The amount of photocatalyst used in this example was 30% (mg/mL), and other experimental and detection conditions were the same as those in Example 6.

**Table 1 Comparison of the amount of photocatalyst in Example 6-9**

| | Example 6 | Example 7 | Example 8 | Example 9 |
|---|---|---|---|---|
| Amount of photocatalyst (mg/mL) | 5% | 10% | 20% | 30% |
| Total cannabinoid content in filtrate sample after degradation (ppm) | 13 | 8 | 10 | 14 |

In Table 1, the amount of photocatalyst used in Example 6-9 was 5%, 10%, 10% and 30% (mg/mL), respectively, under the same other experimental conditions, the total content of cannabinoids in the filtrate samples after degradation were 13, 8, 10, and 14 ppm, respectively, indicating that the degradation of cannabinoids is better when the amount of photocatalyst is 10% (mg/mL).

### Example 10

The photocatalyst of this example was bismuth vanadate/bismuth oxychloride composite, and other experimental and detection conditions were the same as those of Example 7.

### Example 11

The photocatalyst of this example was bismuth oxychloride, and other experimental and detection conditions were the same as those of Example 7.

### Example 12

The photocatalyst of this example was bismuth vanadate/titanium dioxide composite, and other experimental and detection conditions were the same as those of Example 7.

### Example 13

The photocatalyst of this example was bismuth vanadate/titanium dioxide composite, and other experimental and detection conditions were the same as those of Example 7.

**Table 2 Comparison of the types of photocatalysts in Example 7, 10-13**

| | Example7 | Example 10 | Example 11 | Example 12 | Example 13 |
|---|---|---|---|---|---|
| Total cannabinoid content in filtrate sample after degradation (ppm) | 8 | 8.1 | 16 | 14 | 20 |

In table 2, the photocatalysts of Examples 7, 10-13 were bismuth vanadate, bismuth vanadate/bismuth oxychloride composite, bismuth vanadate/titanium dioxide composite, and bismuth vanadate/titanium dioxide composite, respectively, under the same other experimental conditions, the total content of cannabinoids in the filtrate samples after degradation were 8, 8.1, 16, 14, and 20 ppm, respectively, indicating that the degradation of cannabinoids is better when the photocatalysts is bismuth vanadate or bismuth vanadate/bismuth oxychloride respectively.

### Example 14

(1) after reserving a sample from a waste liquid containing cannabinoid, the remaining waste liquid was concentrated under reduced pressure at 55°C to obtain a thick paste;
(2) the thick paste was added with 95% ethanol, stirred for dissolution to obtain an enriched liquid of the waste liquid containing cannabinoid;
(3) the enriched liquid in step (2) was placed in a closed treatment tank with illumination equipment, and 18% (mg/mL) of photocatalyst bismuth vanadate was added, and the resulting mixture was stirred at room temperature for 40 minutes with illuminance of 5500 Lx;
(4) the liquid after reaction in step (3) was left standing for 20 hours, and then filtered to obtain a filtrate and a filter cake;
(5) the filter cake obtained in step (4) was added into water, and the resulting mixture was stirred for 15 minutes and then filtered to collect a filter cake. The resulting filter cake was added into 95% ethanol, and the resulting mixture was stirred for 15 minutes and then filtered to collect a filter cake. The resulting filter cake was washed repeatedly for 3 times. The finally collected filter cake was dried in a vacuum environment at 65°C for 20 hours to obtain a recovered photocatalyst; and
(6) the reserved sample of step (1) and the filtrate obtained in step (4) were analyzed by high-performance liquid chromatography (HPLC) to detect the contents of CBDV, CBD, CBG, THCV, and THC.

### Example 15

(1) after reserving a sample from a waste liquid containing cannabinoid, the remaining waste liquid was concentrated under reduced pressure at 65°C to obtain a thick paste;
(2) the thick paste was added with 95% ethanol, stirred for dissolution to obtain an enriched liquid of the waste liquid containing cannabinoid;
(3) the enriched liquid in step (2) was placed in a closed treatment tank with illumination equipment, and 23% (mg/mL) of photocatalyst bismuth vanadate/bismuth oxychloride composite was added, and the resulting mixture was stirred at room temperature for 15 minutes with illuminance of 8300 Lx;
(4) the liquid after reaction in step (3) was left standing for 35 hours, and then filtered to obtain a filtrate and a filter cake;
(5) The filter cake obtained in step (4) was added into water, and the resulting mixture was stirred for 15 minutes and then filtered to collect a filter cake. The resulting filter cake was added into 95% ethanol, and the resulting mixture was stirred for 15 minutes and then filtered to collect a filter cake. The resulting filter cake was washed repeatedly for 3 times. The finally collected filter cake was dried in a vacuum environment at 70°C for 18 hours to obtain a recovered photocatalyst; and
(6) the reserved sample of step (1) and the filtrate obtained in step (4) were analyzed by high-performance liquid chromatography (HPLC) to detect the contents of CBDV, CBD, CBG, THCV, and THC.

### Example 16

(1) after reserving a sample from a waste liquid containing cannabinoid, the remaining waste liquid was concentrated under reduced pressure at 45°C to obtain a thick paste;
(2) the thick paste was added with 95% ethanol, stirred for dissolution to obtain an enriched liquid of the waste liquid containing cannabinoid;
(3) the enriched liquid in step (2) was placed in a closed treatment tank with illumination equipment, and 35% (mg/mL) of photocatalyst bismuth oxychloride was added, and the resulting mixture was stirred at room temperature for 10 minutes with illuminance of 3800 Lx;
(4) the liquid after reaction in step (3) was left standing for 65 hours, and then filtered to obtain a filtrate and a filter cake;
(5) the filter cake obtained in step (4) was added into water, and the resulting mixture was stirred for 15 minutes and then filtered to collect a filter cake. The resulting filter cake was added into 95% ethanol, and the resulting mixture was stirred for 15 minutes and then filtered to collect a filter cake. The resulting filter cake was washed repeatedly for 3 times. The finally collected filter cake was dried in a vacuum environment at 55°C for 24 hours to obtain a recovered photocatalyst; and
(6) the reserved solution of step (1) and the filtrate obtained in step (4) were analyzed by high-performance liquid chromatography (HPLC) to detect the contents of CBDV, CBD, CBG, THCV, and THC.

### Example 17

(1) after reserving a sample from a waste liquid containing cannabinoid, the remaining waste liquid was concentrated under reduced pressure at 60°C to obtain a thick paste;
(2) the thick paste was added with 95% ethanol, stirred for dissolution to obtain an enriched liquid of the waste liquid containing cannabinoid;
(3) the enriched liquid in step (2) was placed in a closed treatment tank with illumination equipment, and 42% (mg/mL) of photocatalyst bismuth vanadate/bismuth oxychloride composite was added, and the resulting mixture was and stirred at room temperature for 55 minutes with illuminance of 7200 Lx;
(4) the liquid after reaction in step (3) was left standing for 18 hours, and then filtered to obtain a filtrate and a filter cake;
(5) the filter cake obtained in step (4) was added into water, and the resulting mixture was stirred for 15 minutes and then filtered to collect a filter cake. The resulting filter cake was added into ethanol, and the resulting mixture was stirred for 15 minutes and then filtered to collect a filter cake. The resulting filter cake was washed repeatedly for 3 times. The finally collected filter cake was dried in a vacuum environment at 75°C for 15 hours to obtain a recovered photocatalyst; and
(6) the reserved sample of step (1) and the filtrate obtained in step (4) were analyzed by high-performance liquid chromatography (HPLC) to detect the contents of CBDV, CBD, CBG, THCV, and THC.

### Example 18

(1) after reserving a sample from a waste liquid containing cannabinoid, the remaining waste liquid was concentrated under reduced pressure at 53°C to obtain a thick paste;
(2) the thick paste was added with 95% ethanol, stirred for dissolution to obtain an enriched liquid of the waste liquid containing cannabinoid;
(3) the enriched liquid in step (2) was placed in a closed treatment tank with illumination equipment, and 7% (mg/mL) of photocatalyst bismuth vanadate/titanium dioxide composite was added, and the resulting mixture was stirred at room temperature for 25 minutes with illuminance of 10500 Lx;
(4) the liquid after reaction in step (3) was left standing for 40 hours, and then filtered to obtain a filtrate and a filter cake;
(5) the filter cake obtained in step (4) was added into water, and the resulting mixture was stirred for 15 minutes and then filtered to collect a filter cake. The resulting filter cake was added into 95% ethanol, and the resulting mixture was stirred for 15 minutes and then filtered to collect a filter cake. The resulting filter cake was washed repeatedly for 3 times. The finally collected filter cake was dried in a vacuum environment of 80°C at 12 hours to obtain a recovered photocatalyst; and
(6) the reserved sample of step (1) and the filtrate obtained in step (4) were analyzed by high-performance liquid chromatography (HPLC) to detect the contents of CBDV, CBD, CBG, THCV, and THC.

## Claims

1. A method of degrading cannabinoid by a photocatalytic reaction on a solution containing cannabinoid using a photocatalyst, wherein the cannabinoid comprises one or a combination or two or more of tetrahydrocannabinol THC, cannabinol CBD, cannabigerol CBG, cannabichromene CBC, cannabinol CBN, and propyl homologues Δ9-tetrahydrocannabivarin THCV and cannabidivarin CBDV;
wherein the method comprises the following steps:
(1) placing the liquid containing cannabinoid in a container equipped with illuminance equipment, adding a photocatalyst and stirring at room temperature; and
(2) standing the liquid in step (1), and filtering to obtain a filtrate and a filter cake;
wherein the illumination equipment in step (1) has an illuminance of 2000~20000 Lx;
wherein a mass-volume ratio of an amount of the photocatalyst to the solution containing cannabinoid in step (1) is 5% to 50% in mg/mL;
wherein the solution containing cannabinoid is a waste liquid produced in a process of extraction and purification of hemp,
wherein the photocatalyst in step (1) is selected from one or a combination of two or more of bismuth vanadate, bismuth oxychloride, bismuth vanadate/titanium dioxide composite, bismuth vanadate/bismuth oxychloride composite, bismuth oxychloride/titanium dioxide composite in any proportion.

2. The method for degrading cannabinoid according to claim 1, wherein the illuminance is 4500~12000 Lx.

3. The method for degrading cannabinoid according to claim 2, wherein the illuminance is 7000~12000 Lx.

4. The method for degrading cannabinoid according to claim 1, wherein the mass-volume ratio of an amount of the photocatalyst to the solution containing cannabinoid is 10% to 30% in mg/mL.

5. The method for degrading cannabinoid according to claim 4, wherein the mass-volume ratio of the amount of the photocatalyst to the solution containing cannabinoid is 10% to 20% in mg/mL.

6. The method for degrading cannabinoid according to claim 1, wherein the photocatalyst in step (1) is bismuth vanadate or bismuth vanadate/bismuth oxychloride composite.

7. The method for degrading cannabinoid according to claim 1, wherein before the step (1), the method also comprises: (a) concentrating the liquid containing cannabinoid to obtain a thick paste; and (b) adding a solvent to the thick paste, stirring and dissolving to obtain an enriched liquid of the liquid containing cannabinoid; and the filter cake obtained in the step (2) is reused as a photocatalyst.

8. The method for degrading cannabinoid according to claim 7, wherein the solvent in step (b) is an organic solvent.

9. The method for degrading cannabinoid according to claim 8, wherein the solvent in step (b) is selected from one or a combination of two or more of ethanol, methanol, ethyl acetate, acetone, chloroform, petroleum ether, n-hexane, and n-heptane in any proportion.

10. The method for degrading cannabinoid according to claim 8, wherein the organic solvent is selected from one or a combination of two or more of ethanol, methanol, ethyl acetate, and acetone in any proportion.

## Patentansprüche

1. Ein Verfahren zum Abbauen von Cannabinoid durch eine photokatalytische Reaktion an einer Lösung, die Cannabinoid enthält, unter Verwendung eines Photokatalysators, wobei das Cannabinoid ein oder eine Kombination von zwei oder mehr von Tetrahydrocannabinol THC, Cannabinol CBD, Cannabigerol CBG,
Cannabichromen CBC, Cannabinol CBN und Propylhomologen Δ9-Tetrahydrocannabivarin THCV und Cannabidivarin CBDV beinhaltet;
wobei das Verfahren die folgenden Schritte beinhaltet:
(1) Platzieren der Flüssigkeit, die Cannabinoid beinhaltet, in einen Behälter, der mit Beleuchtungsstärkeausstattung ausgestattet ist, Hinzufügen eines Photokatalysators und Rühren bei Raumtemperatur; und
(2) Stehenlassen der Flüssigkeit in Schritt (1) und Filtern, um ein Filtrat und einen Filterkuchen zu erhalten;
wobei die Beleuchtungsausstattung in Schritt (1) eine Beleuchtungsstärke von 2000~20000 Lx aufweist;
wobei ein Masse-Volumen-Verhältnis einer Menge des Photokatalysators zu der Lösung, die Cannabinoid enthält, in Schritt (1) 5 % bis 50 % in mg/ml beträgt;
wobei die Lösung, die Cannabinoid enthält, eine in einem Extraktions- und Reinigungsprozess von Hanf produzierte Abfallflüssigkeit ist,
wobei der Photokatalysator in Schritt (1) aus einem oder einer Kombination von zwei oder mehr von Bismutvanadat, Bismutoxychlorid, Bismutvanadat/Titandioxid-Komposit, Bismutvanadat/Bismutoxychlorid-Komposit, Bismutoxychlorid/Titandioxid-Komposit in beliebiger Proportion ausgewählt ist.

2. Verfahren zum Abbauen von Cannabinoid gemäß Anspruch 1, wobei die Beleuchtungsstärke 4500~12000 Lx beträgt.

3. Verfahren zum Abbauen von Cannabinoid gemäß Anspruch 2,
wobei die Beleuchtungsstärke 7000~12000 Lx beträgt.

4. Verfahren zum Abbauen von Cannabinoid gemäß Anspruch 1, wobei das Masse-Volumen-Verhältnis einer Menge des Photokatalysators zu der Lösung, die Cannabinoid enthält, 10 % bis 30 % in mg/ml beträgt.

5. Verfahren zum Abbauen von Cannabinoid gemäß Anspruch 4, wobei das Masse-Volumen-Verhältnis der Menge des Photokatalysators zu der Lösung, die Cannabinoid enthält, 10 % bis 20 % in mg/ml beträgt.

6. Verfahren zum Abbauen von Cannabinoid gemäß Anspruch 1, wobei der Photokatalysator in Schritt (1) Bismutvanadat oder Bismutvanadat/Bismutoxychlorid-Komposit ist.

7. Verfahren zum Abbauen von Cannabinoid gemäß Anspruch 1, wobei das Verfahren vor dem Schritt (1) auch Folgendes beinhaltet: (a) Konzentrieren der Flüssigkeit, die Cannabinoid enthält, um eine dicke Paste zu erhalten; und (b) Hinzufügen eines Lösemittels zu der dicken Paste, Rühren und Auflösen, um eine angereicherte Flüssigkeit der Flüssigkeit, die Cannabinoid enthält, zu erhalten, und wobei der in dem Schritt (2) erhaltene Filterkuchen als ein Photokatalysator wiederverwendet wird.

8. Verfahren zum Abbauen von Cannabinoid gemäß Anspruch 7, wobei das Lösemittel in Schritt (b) ein organisches Lösemittel ist.

9. Verfahren zum Abbauen von Cannabinoid gemäß Anspruch 8, wobei das Lösemittel in Schritt (b) aus einem oder einer Kombination von zwei oder mehr von Ethanol, Methanol, Ethylacetat, Aceton, Chloroform, Petrolether, n-Hexan und n-Heptan in beliebiger Proportion ausgewählt ist.

10. Verfahren zum Abbauen von Cannabinoid gemäß Anspruch 8, wobei das organische Lösemittel aus einem oder einer Kombination von zwei oder mehr von Ethanol, Methanol, Ethylacetat und Aceton in beliebiger Proportion ausgewählt ist.

## Revendications

1. Un procédé consistant à dégrader un cannabinoïde par une réaction photocatalytique sur une solution contenant un cannabinoïde en utilisant un photocatalyseur, le cannabinoïde comprenant un cannabinoïde ou une combinaison de deux cannabinoïdes ou plus d'entre le tétrahydrocannabinol THC, le cannabinol CBD, le cannabigérol CBG, le cannabichromène CBC, le cannabinol CBN, et les homologues propyle Δ9-tétrahydrocannabivarine THCV et cannabidivarine CBDV ;
le procédé comprenant les étapes suivantes consistant :
(1) à placer le liquide contenant le cannabinoïde dans un récipient équipé d'un équipement d'éclairement lumineux, à ajouter un photocatalyseur et à agiter à température ambiante ; et
(2) à laisser reposer le liquide de l'étape (1), et à filtrer afin d'obtenir un filtrat et un gâteau de filtration ;
dans lequel l'équipement à éclairement lumineux de l'étape (1) a un éclairement lumineux de 2 000 - 20 000 Lx ;
dans lequel un rapport masse-volume d'une quantité du photocatalyseur à la solution contenant le cannabinoïde de l'étape (1) est de 5 % à 50 % en mg/mL ;
dans lequel la solution contenant le cannabinoïde est un liquide résiduaire produit dans un processus d'extraction et de purification du chanvre,
dans lequel le photocatalyseur de l'étape (1) est sélectionné parmi un photocatalyseur ou une combinaison de deux photocatalyseurs ou plus d'entre le vanadate de bismuth, l'oxychlorure de bismuth, un composite vanadate de bismuth/dioxyde de titane, un composite vanadate de bismuth/oxychlorure de bismuth, un composite oxychlorure de bismuth/dioxyde de titane dans n'importe quelle proportion.

2. Le procédé pour dégrader un cannabinoïde selon la revendication 1, dans lequel l'éclairement lumineux est de 4 500 - 12 000 Lx.

3. Le procédé pour dégrader un cannabinoïde selon la revendication 2, dans lequel l'éclairement lumineux est de 7 000 - 12 000 Lx.

4. Le procédé pour dégrader un cannabinoïde selon la revendication 1, dans lequel le rapport masse-volume d'une quantité du photocatalyseur à la solution contenant le cannabinoïde est de 10 % à 30 % en mg/mL.

5. Le procédé pour dégrader un cannabinoïde selon la revendication 4, dans lequel le rapport masse-volume de la quantité du photocatalyseur à la solution contenant le cannabinoïde est de 10 % à 20 % en mg/mL.

6. Le procédé pour dégrader un cannabinoïde selon la revendication 1, dans lequel le photocatalyseur de l'étape (1) est le vanadate de bismuth ou un composite vanadate de bismuth/oxychlorure de bismuth.

7. Le procédé pour dégrader un cannabinoïde selon la revendication 1, avant l'étape (1), le procédé comprenant aussi le fait : (a) de concentrer le liquide contenant le cannabinoïde afin d'obtenir une pâte épaisse ; et (b) d'ajouter un solvant à la pâte épaisse, d'agiter et de dissoudre afin d'obtenir un liquide enrichi du liquide contenant le cannabinoïde ; et le gâteau de filtration obtenu à l'étape (2) est réutilisé comme photocatalyseur.

8. Le procédé pour dégrader un cannabinoïde selon la revendication 7, dans lequel le solvant de l'étape (b) est un solvant organique.

9. Le procédé pour dégrader un cannabinoïde selon la revendication 8, dans lequel le solvant de l'étape (b) est sélectionné parmi un solvant ou une combinaison de deux solvants ou plus d'entre l'éthanol, le méthanol, l'acétate d'éthyle, l'acétone, le chloroforme, l'éther de pétrole, le n-hexane, et le n-heptane dans n'importe quelle proportion.

10. Le procédé pour dégrader un cannabinoïde selon la revendication 8, dans lequel le solvant organique est sélectionné parmi un solvant ou une combinaison de deux solvants ou plus d'entre l'éthanol, le méthanol, l'acétate d'éthyle, et l'acétone dans n'importe quelle proportion.
